# EUROPEAN PATENT APPLICATION

(11) **EP 4 694 258 A1**
(43) Date of publication of application: **11.02.2026**
(21) Application number: 23929276.6
(22) Date of filing: 29.03.2023
(51) Int. Cl.: H04W 12/06

(54) **IDENTITY AUTHENTICATION METHOD AND DEVICE**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2023/084908
(87) International publication number: WO 2024/197678

(57) **Abstract**

The present disclosure relates to the technical field of communications, and provides an identity authentication method and device. According to the identity authentication method provided by embodiments of the present disclosure, a user equipment (UE) can generate an NAI in a non-public network (NPN) scenario to obtain a target NAI used for identity authentication between the UE and the NPN, and then sends a message comprising the target NAI to a wireless local area network access network (WLAN AN), such that the UE and the NPN can implement authentication during 5G NSWO in the NPN scenario.

## Description

### FIELD

The present disclosure relates to the field of communication technologies, and in particular relates to a method and an apparatus for authentication.

### BACKGROUND

A 5th generation (5G) non-seamless wireless local area network (WLAN) offload (NSWO) is a capability provided by a 5G system (5GS) and a user equipment (UE) to connect to a WLAN access network (AN) using a 5GS credential without registering with the 5GS.

According to a 5G core network architecture TS 23.501 [1], a non-public network (NPN) should support an NSWO (also known as a non-seamless WLAN offload). However, in an NPN scenario, the UE may not perform routing, making it impossible for the UE and NPN to implement authentication of the 5G NSWO.

### SUMMARY

The present disclosure provides a method and an apparatus for authentication, which enable a UE and an NPN to implement authentication of a 5G NSWO process in an NPN scenario.

According to a first aspect of embodiments of the present disclosure, a method for authentication is provided, applied to a user equipment (UE), including:
sending a message including a target network access identifier (NAI) to a wireless local area network (WLAN) access network (AN), in which the target NAI is used for an authentication in a procedure of a non-seamless WLAN offload (NSWO) between the UE and a non-public network (NPN).

In some embodiments, the method further includes:
determining the target NAI, in which the target NAI includes a username part and a realm part, and the realm part includes a preset label, a network identifier (NID), a mobile network code (MNC) and a mobile country code (MCC); and
the preset label indicates that the target NAI is used to perform the NSWO, and the realm part is used for the WLAN AN to determine a target non-seamless WLAN offload function (NSWOF) in the NPN, or the realm part is used for the WLAN AN to determine an AAA server associated with the NPN.

In some embodiments, the username part in the target NAI is omitted or the username part is set to anonymous in response to the UE using an anonymous subscriber concealed identifier (SUCI).

In some embodiments, the method further includes:
performing the authentication with the NPN through the target NSWOF; or
performing the authentication with the NPN through the AAA server associated with the NPN.

In some embodiments, the realm part indicates the NPN that the UE needs to access.

According to a second aspect of embodiments of the present disclosure, a method for authentication is provided, applied to a wireless local area network (WLAN) access network (AN), including:
receiving a message including a target network access identifier (NAI) and sent by a user equipment (UE), in which the target NAI is used for an authentication in a procedure of a non-seamless WLAN offload (NSWO) between the UE and a non-public network (NPN).

In some embodiments, the target NAI includes a username part and a realm part, and the realm part includes a preset label, a network identifier (NID), a mobile network code (MNC) and a mobile country code (MCC); and
the preset label indicates that the target NAI is used to perform the NSWO, and the realm part is used for the WLAN AN to determine a target non-seamless WLAN offload function (NSWOF) in the NPN, or for the WLAN AN to determine an AAA server associated with the NPN.

In some embodiments, the username part in the target NAI is omitted or the username part is set to anonymous in response to the UE using an anonymous subscriber concealed identifier (SUCI).

In some embodiments, the method further includes:
determining the target NSWOF according to the realm part; or
determining, according to the realm part, the AAA server associated with the NPN.

In some embodiments, the method further includes:
sending the message including the target NAI to the target NSWOF to enable the UE to perform the authentication with the NPN through the target NSWOF; or
sending the message including the target NAI to the AAA server associated with the NPN to enable the UE to perform the authentication with the NPN through the AAA server associated with the NPN.

In some embodiments, the realm part indicates the NPN that the UE needs to access.

According to a third aspect of embodiments of the present disclosure, an apparatus for authentication is provided, applied to a user equipment (UE), including:
a sending module configured to send a message including a target network access identifier (NAI) to a wireless local area network (WLAN) access network (AN), in which the target NAI is used for authentication in a procedure of a non-seamless WLAN offload (NSWO) between the UE and a non-public network (NPN).

According to a fourth aspect of embodiments of the present disclosure, an apparatus for authentication is provided, applied to a wireless local area network (WLAN) access network (AN), including:
a receiving module configured to receive a message including a target network access identifier (NAI) sent by a user equipment (UE), in which the target NAI is used for authentication in a procedure of a non-seamless WLAN offload (NSWO) between the UE and a non-public network (NPN).

According to a fifth aspect of embodiments of the present disclosure, a communication device is provided, including: a transceiver; a memory; and a processor, respectively connected to the transceiver and the memory, configured to control receiving and sending a wireless signal of the transceiver by executing computer-executable instructions on the memory, and perform the method of the embodiments of the first aspect or the second aspect of the present disclosure.

According to a sixth aspect of embodiments of the present disclosure, there is provided a computer storage medium having stored therein computer-executable instructions that, when executed by a processor, cause the method of the embodiments of the first aspect or the second aspect of the present disclosure.

The present disclosure provides a method and an apparatus for authentication. The UE may send the message including the NAI to the WLAN AN, such that the UE and the NPN may implement the authentication of the 5G NSWO according to the target NAI in an NPN scenario.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

The above and/or additional aspects and advantages of the present disclosure will become apparent and more readily appreciated from the following descriptions of embodiments made with reference to the drawings.
FIG. 1 is a flow chart illustrating a method for authentication according to embodiments of the present disclosure;
FIG. 2 is a flow chart illustrating a method for authentication according to embodiments of the present disclosure;
FIG. 3 is a flow chart illustrating a method for authentication according to embodiments of the present disclosure;
FIG. 4 is a flow chart illustrating a method for authentication according to embodiments of the present disclosure;
FIG. 5 is a sequence chart illustrating a method for authentication according to embodiments of the present disclosure;
FIG. 6 is a sequence chart illustrating a method for authentication according to embodiments of the present disclosure;
FIG. 7 is a block diagram illustrating an apparatus for authentication according to embodiments of the present disclosure;
FIG. 8 is a block diagram illustrating an apparatus for authentication according to embodiments of the present disclosure;
FIG. 9 is a structural diagram illustrating a communication device according to embodiments of the present disclosure; and
FIG. 10 is a structural diagram illustrating a chip according to embodiments of the present disclosure.

### DETAILED DESCRIPTION

Reference will be made in detail to embodiments of the present disclosure, examples of which are shown in the drawings. The same or similar elements or the elements having the same or similar functions are denoted by the same or similar reference numerals throughout the descriptions. The embodiments described herein with reference to drawings are illustrative, and used to explain the present disclosure. The embodiments shall not be construed to limit the present disclosure.

Reference will be made in detail to embodiments of the present disclosure, examples of which are shown in the drawings. The same or similar elements or the elements having the same or similar functions are denoted by the same or similar reference numerals throughout the descriptions. The embodiments described herein with reference to drawings are illustrative, and used to explain the present disclosure. The embodiments shall not be construed to limit the present disclosure. It should be noted that the embodiments of the present application and the features in the embodiments may be combined with each other as long as there is no conflict.

Terms used herein in embodiments of the present disclosure are only for the purpose of describing specific embodiments, but should not be construed to limit embodiments of the present disclosure. As used in the embodiments of the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

In order to facilitate understanding, terms related to the present embodiment will first be described.
1. Non-seamless wireless local area network (WLAN) offload (NSWO)
   5th generation (5G) NSWO is a capability provided by a 5G system (5GS) and a user equipment (UE) to connect to a WLAN access network (AN) using a 5GS credential without registering with the 5GS.
2. Network access identifier (NAI)
   The NAI includes a username part and a realm part of a user.
3. Non-seamless WLAN offload function (NSWOF)
   The main function of the NF is to support an authentication for the NSWO in the 5GS.
4. Network identifier (NID)

A non-public network (NPN) network identifier is composed of a public land mobile network (PLMN) ID and the NID, and the NID is composed of an 11-digit hexadecimal number.

According to a 5G core network architecture TS 23.501 [1], the NPN should support the NSWO. However, in an NPN scenario, the UE may not perform routing, making it impossible for the UE and NPN to implement the authentication for the 5G NSWO.

Therefore, the present embodiment proposes a method and an apparatus for authentication, which enable the UE and the NPN to implement the authentication in a procedure of the 5G NSWO in the NPN scenario.

It may be understood that the solution provided by the present disclosure may be applied to the UE or another executable subject. In the following embodiments of the present disclosure, the technical solution in the present disclosure is described by taking the execution subject as the UE as an example, but the present disclosure does not constitute a specific limitation. However, the UE may be a communication device such as a mobile phone, a notebook, a tablet computer, a POS machine and an in-vehicle computer, which is not limited in the present disclosure.

The method and apparatus for authentication provided by the present disclosure will be introduced in detail below with reference to the accompanying drawings.

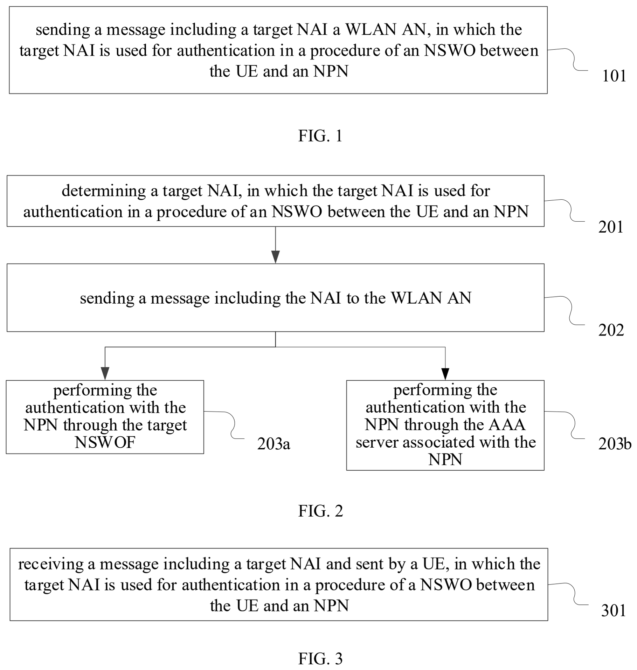

FIG. 1 is a flow chart illustrating a method for authentication according to embodiments of the present disclosure. As shown in FIG. 1, the method is applied to a UE and may include the following steps.

In step 101, a message including a target NAI is sent to a WLAN AN, in which the target NAI is used for an authentication in a procedure of an NSWO between the UE and an NPN.

In embodiments of the present disclosure, the UE should be able to support generation of the target NAI suitable for a network element discovery and a message routing in an NPN scenario to enable the NSWO in the NPN scenario. The target NAI should include a 5gc-nswo in a realm part, which indicates that the target NAI is used to perform the NSWO, and an NID, which is used to perform the network element discovery and the message routing in the NPN scenario.

In a specific application scenario, in order to implement an authentication between a home network and the UE, in a case where the UE decides to use the 5G NSWO to connect to the WLAN AN using its 5GS credential, but is not registered with the NPN, a format of the target NAI of the 5G NSWO may be used. That is, the UE may send the message including the target NAI to the WLAN AN, such that the UE and the NPN perform the authentication in the procedure of the NSWO. Correspondingly, after the WLAN AN receives the message including the target NAI, as a possible implementation, the WLAN AN may determine the NSWOF in the NPN according to the realm part in the target NAI, send the target NAI to the NSWOF, and further enable the UE and the NPN to perform the authentication through the selected NSWOF. As a possible implementation, the WLAN AN may determine an AAA server associated with the NPN according to the realm part of the target NAI, and send the target NAI to the AAA server associated with the NPN, and further enable the UE and the NPN to perform the authentication through the selected AAA server. The message sent by the UE to the WLAN AN may be any network message that may include the target NAI, and the message type is not specifically limited in the present disclosure. AAA is short for authentication, authorization and accounting.

In summary, according to the method for the authentication provided by the embodiments of the present disclosure, the UE may send the message including the target NAI to the WLAN AN, such that the UE and the NPN perform the authentication for the 5G NSWO according to the target NAI in the NPN scenario.

FIG. 2 is a flow chart illustrating a method for authentication according to embodiments of the present disclosure. As shown in FIG. 2, the method is applied to a UE and may include the following steps.

In step 201, a target NAI is determined, in which the target NAI is used for an authentication in a procedure of an NSWO between the UE and an NPN.

In embodiments of the present disclosure, as a possible application scenario, the target NAI generated for the NPN scenario may include a username part and a realm part, and the realm part includes a preset label, an NID, a mobile network code (MNC) and a mobile country code (MCC). That is, a target NAI format of the NAI in the NPN scenario may be:
"<username>@5ge-nswo.nid<NID>.mnc.<MNC>.mec<MCC>.3gppnetwork.org".

<username> is a username part in the target NAI, and the username part is username information, which is used to identify the UE in an authentication and/or an authorization process. @5gc-nswo.nid<NID>.mnc.<MNC>.mcc<MCC>.3gppnetwork.org is a realm part extended in the target NAI, and the realm part is realm information, which is used for a network element discovery and a message routing in the NPN scenario. The realm part specifically indicates the NPN that the UE needs to access, and used for the WLAN AN to determine a target NSWOF in the NPN, or used for the WLAN AN to determine the AAA server associated with the NPN. @5gc-nswo in the realm part is a preset label, and the preset label indicates that the target NAI is used to perform the NSWO.

According to the embodiments of the present disclosure, in a case where the UE generates the target NAI in the NPN scenario, the UE may omit the username part in the target NAI or set the username part to anonymous in response to the UE using an anonymous subscriber concealed identifier (SUCI).

Correspondingly, in a case where the username part in the target NAI is omitted, as a possible application scenario, the target NAI may include the realm part, and the realm part includes the preset label, the NID, the MNC and the MCC. That is, the target NAI format of the NAI in the NPN scenario may be:
"@5gc-nswo.nid<NID>.mnc.<MNC>.mcc<MCC>.3gppnetwork.org".

@5ge-nswo.nid<NID>.mnc.<MNC>.mec<MCC>.3gppnetwork.org is the realm part extended in the target NAI, and the realm part is the realm information, which is used for the network element discovery and the message routing in the NPN scenario. The realm part specifically indicates the NPN that the UE needs to access, and used for the WLAN AN to determine the target NSWOF in the NPN, or used for the WLAN AN to determine the AAA server associated with the NPN. @5gc-nswo in the realm part is the preset label, and the preset label indicates that the target NAI is used to perform the NSWO.

Correspondingly, in a case where the username part is set to anonymous, as a possible application scenario, the target NAI includes the username part and the realm part, and the realm part includes the preset label, the NID, the MNC and the MCC. That is, the target NAI format of the NAI in the NPN scenario may be:
"<anonymous>@5gc-nswo.nid<NID>.mnc.<MNC>.mcc<MCC>.3gppnetwork.org".

<anonymous> is anonymous username part in the target NAI, and the username part is username information, which is used to identify the UE in the authentication and/or the authorization process. @5gc-nswo.nid<NID>.mnc.<MNC>.mcc<MCC>.3gppnetwork.org is the realm part extended in the target NAI, and the realm part is the realm information, which is used for the network element discovery and the message routing in the NPN scenario. The realm part specifically indicates the NPN that the UE needs to access, and used for the WLAN AN to determine the target NSWOF in the NPN, or used for the WLAN AN to determine the AAA server associated with the NPN. @5gc-nswo in the realm part is the preset label, and the preset label indicates that the target NAI is used to perform the NSWO.

In step 202, a message including the NAI is sent to the WLAN AN.

According to the embodiments of the present disclosure, after generating the target NAI, the UE may send the target NAI to the WLAN AN, such that the UE and the NPN perform the authentication in the procedure of the NSWO according to the target NAI. Correspondingly, after receiving the target NAI, as a possible implementation, the WLAN AN may first determine the target NAI for the NSWO according to the preset tag @5gc-nswo, then determine the NPN that the UE needs to access according to the realm part in the target NAI, determine the target NSWOF in the NPN, and send the target NAI to the NSWOF, such that the UE and the NPN may perform the authentication for the 5G NSWO through the selected NSWOF. Specifically, the UE may send the message including the target NAI to the WLAN AN, such that the WLAN AN obtains the target NAI, and after the WLAN AN determines the target NSWOF in the NPN, the WLAN AN may route a message sent by the UE to a relevant NSWOF through the realm part, such that the NSWOF may support the UE and the NPN to implement the authentication for the 5G NSWO.

As a possible implementation, the WLAN AN may first determine the target NAI for the NSWO according to the preset tag @5gc-nswo, then determine the NPN that the UE needs to access according to the realm part in the target NAI, determine the AAA server associated with the NPN, and send the target NAI to the AAA server, such that the UE and the NPN may perform the authentication for the 5G NSWO through the associated AAA server. Specifically, the UE may send the message including the target NAI to the WLAN AN, such that the WLAN AN obtains the target NAI, and after the WLAN AN determines the AAA server associated with the NPN, the WLAN AN may route the message sent by the UE to the AAA server through the realm part, such that the AAA server may support the UE and the NPN to implement the authentication for the 5G NSWO.

It should be noted that the message sent by the UE to the WLAN AN may be any network message that may include the target NAI, and the message type is not specifically limited in the present disclosure

In step 203a, the authentication is performed with the NPN through the target NSWOF.

As step 203b of the embodiment parallel to step 203a of the embodiment, the authentication is performed with the NPN through the AAA server associated with the NPN.

According to the method for the authentication provided in the present disclosure, the UE may generate the target NAI suitable for the NPN scenario, and then send the target NAI to the WLAN AN, such that the UE and the NPN may implement the authentication for the 5G NSWO in the NPN scenario.

FIG. 3 is a flow chart illustrating a method for authentication according to embodiments of the present disclosure. As shown in FIG. 3, the method is applied to a WLAN AN and may include the following steps.

In step 301, a message including a target NAI and sent by a UE is received, in which the target NAI is used for an authentication in a procedure of a NSWO between the UE and an NPN.

In embodiments of the present disclosure, the WLAN AN should be able to understand the target NAI received from the UE, and with the target NAI, the WLAN AN should be able to route a traffic to the NSWOF located in the NPN or to the AAA server associated with the NPN. The target NAI is an NAI generated by the UE that is suitable for a network element discovery and a message routing in an NPN scenario. The target NAI should include a 5gc-nswo in a realm part and an NID. The 5gc-nswo indicates that the NAI is used for the NSWO, and the realm part is used for the network element discovery and the message routing in the NPN scenario.

In a specific application scenario, in a case where the UE decides to use the 5G NSWO to connect to the WLAN AN using its 5GS credential, but is not registered with the NPN, a format of the target NAI of the 5G NSWO may be used. That is, the UE may send the message including the target NAI to the WLAN AN, such that the UE and the NPN perform the authentication in the procedure of the NSWO. Correspondingly, for the embodiments of the present disclosure, as a possible implementation, the WLAN AN may receive the message including the target NAI and sent by the UE, and further determine the NPN that the UE needs to access according to the obtained target NAI, as well as the NSWOF in the NPN that matches the realm part of the target NAI, and route the message sent by the UE to the relevant NSWOF through the realm part, such that the UE and the NPN may perform the authentication through the selected NSWOF. As a possible implementation, the WLAN AN may receive the message including the target NAI and sent by the UE, further determine the NPN that the UE needs to access and the AAA server associated with the NPN according to the obtained target NAI, and route the message sent by the UE to the relevant AAA server using the realm part, such that the UE and the NPN may perform the authentication through the selected AAA server.

It should be noted that the message sent by the UE to the WLAN AN may be any network message that may include the target NAI, and the message type is not specifically limited in the present disclosure.

According to the method for the authentication provided in the present disclosure, the WLAN AN may receive the target NAI generated by the UE for the NPN scenario, such that the UE and the NPN may implement the authentication for the 5G NSWO in the NPN scenario according to the target NAI.

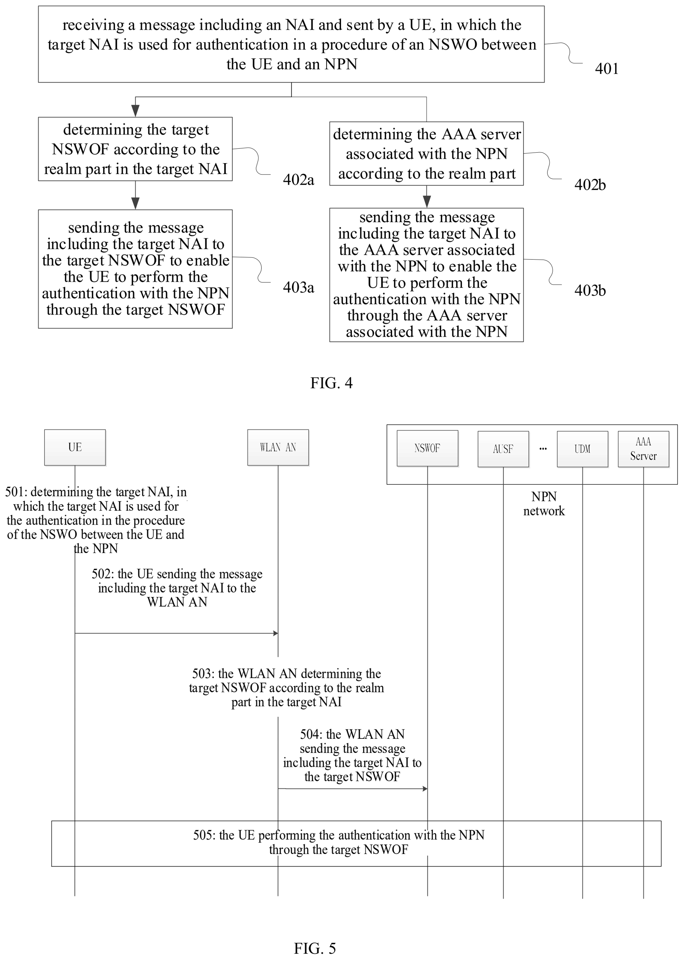

FIG. 4 is a flow chart illustrating a method for authentication according to embodiments of the present disclosure. As shown in FIG. 4, the method is applied to a WLAN AN and may include the following steps.

In step 401, a message including an NAI and sent by a UE is received, in which the target NAI is used for an authentication in a procedure of an NSWO between the UE and an NPN.

According to embodiments of the present disclosure, as a possible application scenario, the target NAI generated for the NPN scenario may include a username part and a realm part, and the realm part includes a preset label, an NID, an MNC and an MCC. That is, a target NAI format of the NAI in the NPN scenario may be:
"<username>@5gc-nswo.nid<NID>.mnc.<MNC>.mcc<MCC>.3 gppnetworkorg".

<username> is a username part in the target NAI, and the username part is username information, which is used to identify the UE in an authentication and/or an authorization process. @5gc-nswo.nid<NID>.mnc.<MNC>.mec<MCC>.3gppnetwork.org is a realm part extended in the target NAI, and the realm part is realm information, which is used for a network element discovery and a message routing in the NPN scenario. The realm part specifically indicates the NPN that the UE needs to access, and used for the WLAN AN to determine a target NSWOF in the NPN, or used for the WLAN AN to determine the AAA server associated with the NPN. @5gc-nswo in the realm part is a preset label, and the preset label indicates that the target NAI is used to perform the NSWO.

In a specific application scenario, in a case where the UE generates the target NAI in the NPN scenario, the UE may omit the username part in the target NAI or set the username part to anonymous in response to the UE using an SUCI.

Correspondingly, in a case where the username part in the target NAI is omitted, as a possible application scenario, the target NAI may include the realm part, and the realm part includes the preset label, the NID, the MNC and the MCC. That is, the target NAI format of the NAI in the NPN scenario may be:
"@Sgc-nswo.nid<NID>.mnc.<MNC>.mcc<MCC>.3gppnetwork.org"

@5ge-nswo.nid<NID>.mnc.<MNC>.mec<MCC>.3gppnetwork.org is a realm part extended in the target NAI, and the realm part is realm information, which is used for the network element discovery and the message routing in the NPN scenario. The realm part specifically indicates the NPN that the UE needs to access, and used for the WLAN AN to determine the target NSWOF in the NPN, or used for the WLAN AN to determine the AAA server associated with the NPN. @5gc-nswo in the realm part is the preset label, and the preset label indicates that the target NAI is used to perform the NSWO.

Correspondingly, in a case where the username part is set to anonymous, as a possible application scenario, the target NAI includes the username part and the realm part, and the realm part includes the preset label, the NID, the MNC and the MCC. That is, the target NAI format of the NAI in the NPN scenario may be:
"<anonymous>g5gc-nswo.nid<NID>.mnc.<MNC>.mcc<MCC>.3gppnetwork.org".

<anonymous> is anonymous username part in the target NAI, and the username part is username information, which is used to identify the UE in the authentication and/or the authorization process. @5gc-nswo.nid<NID>.mnc.<MNC>.mcc<MCC>.3gppnetwork.org is a realm part extended in the target NAI, and the realm part is the realm information, which is used for the network element discovery and the message routing in the NPN scenario. The realm part specifically indicates the NPN that the UE needs to access, and used for the WLAN AN to determine the target NSWOF in the NPN, or used for the WLAN AN to determine the AAA server associated with the NPN. @5gc-nswo in the realm part is the preset label, and the preset label indicates that the target NAI is used to perform the NSWO.

In a specific application scenario, after obtaining the target NAI by extension determination, the UE may send the target NAI to the WLAN AN. Correspondingly, according to the embodiments of the present disclosure, the WLAN AN may receive the target NAI sent by the UE, further determine the target NSWOF in the NPN according to the realm part in the target NAI, and send the target NAI to the NSWOF, such that the UE and the NPN may perform the authentication for the 5G NSWO through the selected NSWOF. Specifically, the UE may send the message including the target NAI, such that the WLAN AN obtains the target NAI. After the WLAN AN determines the target NSWOF in the NPN, the WLAN AN may route the message sent by the UE to the relevant NSWOF through the realm part, such that the NSWOF may support the UE and the NPN to implement the authentication for the 5G NSWO. The message sent by the UE to the WLAN AN may be any network message that may include the target NAI, and the message type is not specifically limited in the present disclosure.

In step 402a, the target NSWOF is determined according to the realm part in the target NAI.

According to embodiments of the present disclosure, the WLAN AN may first determine that the target NAI is used to perform the NSWO according to the preset tag @5gc-nswo in the realm part corresponding to the target NAI, then determine the NPN that the UE needs to access according to the MNC and the MCC in the realm part, determine the NPN that the UE selects to access according to the NID in the realm part, and determine the target NSWOF indicated and selected by the target NAI in the NPN scenario.

In step 403a, the message including the target NAI is sent to the target NSWOF to enable the UE to perform the authentication with the NPN through the target NSWOF.

According to embodiments of the present disclosure, the WLAN AN may route the messages sent by the UE to the relevant NSWOF through the realm part, such that the NSWOF may support the UE and the NPN to implement the authentication for the 5G NSWO. The message sent by the UE to the WLAN AN may be any network message that may include the target NAI, and the message type is not specifically limited in the present disclosure.

As step 402b of the embodiment parallel to step 402a of the embodiment, the AAA server associated with the NPN is determined according to the realm part.

According to embodiments of the present disclosure, the WLAN AN may first determine that the target NAI is used to perform the NSWO according to the preset tag @5gc-nswo in the realm part corresponding to the target NAI, then determine the NPN that the UE needs to access according to the MNC and the MCC in the realm part, determine the NPN that the UE selects to access according to the NID in the realm part, and determine the AAA server associated with the NPN.

In step 403b, the message including the target NAI is sent to the AAA server associated with the NPN to enable the UE to perform the authentication with the NPN through the AAA server associated with the NPN.

According to embodiments of the present disclosure, the WLAN AN may route the message sent by the UE to the relevant AAA server through the realm part, such that the AAA server may support the UE and the NPN to implement the authentication for the 5G NSWO. The message sent by the UE to the WLAN AN may be any network message that may include the target NAI, and the message type is not specifically limited in the present disclosure.

According to the method for the authentication provided in the present disclosure, the WLAN AN may receive the target NAI generated by the UE for the NPN scenario, and determine the target NSWOF selected by the target NAI in the NPN scenario or determine the AAA server associated with the NPN according to the target NAI, such that the UE and the NPN may implement the authentication for the 5G NSWO according to the target NSWOF or the AAA server associated with the NPN in the NPN scenario.

FIG. 5 is a sequence chart illustrating a method for authentication according to embodiments of the present disclosure. The method is applied to a UE and a WLAN AN. A target NAI is determined, in which the target NAI is used for an authentication in a procedure of an NSWO between the UE and an NPN; the UE sends a message including the target NAI to the WLAN AN; the WLAN AN determines the target NSWOF according to a realm part in the target NAI; the WLAN AN sends the message including the target NAI to a target NSWOF; and the UE performs authentication with the NPN through the target NSWOF.

As shown in FIG. 5, the method includes the following steps.

In step 501, the target NAI is determined, in which the target NAI is used for the authentication in the procedure of the NSWO between the UE and the NPN.

According to embodiments of the present disclosure, as a possible application scenario, the target NAI generated for the NPN scenario may include a username part and a realm part, and the realm part includes a preset label, an NID, an MNC and an MCC. That is, a target NAI format of the NAI in the NPN scenario may be:
"<username>@5gc-nswo.nid<NID>.mnc.<MNC>.mcc<MCC>.3gppnetwork.org".

<username> is a username part in the target NAI, and the username part is username information, which is used to identify the UE in an authentication and/or an authorization process. @5gc-nswo.nid<NID>.mnc.<MNC>.mcc<MCC>.3gppnetwork.org is a realm part extended in the target NAI, and the realm part is realm information, which is used for a network element discovery and a message routing in the NPN scenario. The realm part specifically indicates the NPN that the UE needs to access, and used for the WLAN AN to determine the target NSWOF in the NPN, or used for the WLAN AN to determine the AAA server associated with the NPN. @5gc-nswo in the realm part is a preset label, and the preset label indicates that the target NAI is used to perform the NSWO.

In a specific application scenario, in a case where the UE generates the target NAI in the NPN scenario, the UE may omit the username part in the target NAI or set the username part to anonymous in response to the UE using an SUCI.

Correspondingly, in a case where the username part in the target NAI is omitted, as a possible application scenario, the target NAI may include the realm part, and the realm part includes the preset label, the NID, the MNC and the MCC. That is, the target NAI format of the NAI in the NPN scenario may be:
"@5ge-nswo.nid<NID>.mnc.<MNC>.mec<MCC>.3gppnetwork.org"

@5ge-nswo.nid<NID>.mnc.<MNC>.mec<MCC>.3gppnetwork.org is a realm part extended in the target NAI, and the realm part is realm information, which is used for the network element discovery and the message routing in the NPN scenario. The realm part specifically indicates the NPN that the UE needs to access, and used for the WLAN AN to determine the target NSWOF in the NPN, or used for the WLAN AN to determine the AAA server associated with the NPN. @5gc-nswo in the realm part is the preset label, and the preset label indicates that the target NAI is used to perform the NSWO.

Correspondingly, in a case where the username part is set to anonymous, as a possible application scenario, the target NAI includes the username part and the realm part, and the realm part includes the preset label, the NID, the MNC and the MCC. That is, the target NAI format of the NAI in the NPN scenario may be:
"<anonymous>@5gc-nswo.nid<NID>.mnc.<MNC>.mcc<MCC>.3gppnetwork.org".

<anonymous> is anonymous username part in the target NAI, and the username part is username information, which is used to identify the UE in an authentication and/or an authorization process. @5gc-nswo.nid<NID>.mnc.<MNC>.mcc<MCC>.3gppnetwork.org is a realm part extended in the target NAI, and the realm part is realm information, which is used for the network element discovery and the message routing in the NPN scenario. The realm part specifically indicates the NPN that the UE needs to access, and used for the WLAN AN to determine the target NSWOF in the NPN, or used for the WLAN AN to determine the AAA server associated with the NPN. @5gc-nswo in the realm part is the preset label, and the preset label indicates that the target NAI is used to perform the NSWO.

In step 502, the UE sends the message including the target NAI to the WLAN AN.

According to embodiments of the present disclosure, after generating the target NAI, the UE may send the target NAI to the WLAN AN, such that the UE and the NPN perform the authentication in the procedure of the NSWO according to the target NAI. Correspondingly, after receiving the target NAI, as a possible implementation, the WLAN AN may first determine the target NAI to perform the NSWO according to the preset tag @5gc-nswo, then determine the NPN that the UE needs to access according to the realm part in the target NAI, determine the target NSWOF in the NPN, and send the target NAI to the NSWOF, such that the UE and the NPN may perform the authentication for the 5G NSWO through the selected NSWOF. Specifically, the UE may send the message including the target NAI to the WLAN AN, such that the WLAN AN obtains the target NAI, and after the WLAN AN determines the target NSWOF in the NPN, the WLAN AN may route a message sent by the UE to a relevant NSWOF through the realm part, such that the NSWOF may support the UE and the NPN to implement the authentication for the 5G NSWO.

As a possible implementation, the WLAN AN may first determine the target NAI for performing the NSWO according to the preset tag @5gc-nswo, then determine the NPN that the UE needs to access according to the realm part in the target NAI, determine the AAA server associated with the NPN, and send the target NAI to the AAA server, such that the UE and the NPN may perform the authentication for the 5G NSWO through the associated AAA server. Specifically, the UE may send the message including the target NAI to the WLAN AN, such that the WLAN AN obtains the target NAI, and after the WLAN AN determines the AAA server associated with the NPN, the WLAN AN may route the message sent by the UE to the AAA server through the realm part, such that the AAA server may support the UE and the NPN to implement the authentication for the 5G NSWO.

It should be noted that the message sent by the UE to the WLAN AN may be any network message that may include the target NAI, and the message type is not specifically limited in the present disclosure.

In step 503, the WLAN AN determines the target NSWOF according to the realm part in the target NAI.

According to the embodiments of the present disclosure, the WLAN AN may first determine that the target NAI is used to perform the NSWO according to the preset tag @5gc-nswo in the realm part corresponding to the target NAI, then determine the NPN that the UE needs to access according to the MNC and the MCC in the realm part, determine the NPN that the UE selects to access according to the NID in the realm part, and determine the target NSWOF indicated and selected by the target NAI in the NPN scenario.

In step 504, the WLAN AN sends the message including the target NAI to the target NSWOF.

According to embodiments of the present disclosure, the WLAN AN may route the message sent by the UE to the relevant NSWOF through the realm part, such that the NSWOF may support the UE and the NPN to implement the authentication for the 5G NSWO. The message sent by the UE to the WLAN AN may be any network message that may include the target NAI, and the message type is not specifically limited in the present disclosure.

In step 505, the UE performs the authentication with the NPN through the target NSWOF.

According to the method for authentication provided in the present disclosure, the WLAN AN may generate the target NAI suitable for the NPN scenario and then send the target NAI to the WLAN AN, such that the UE and the NPN may implement the authentication for the 5G NSWO in the NPN scenario.

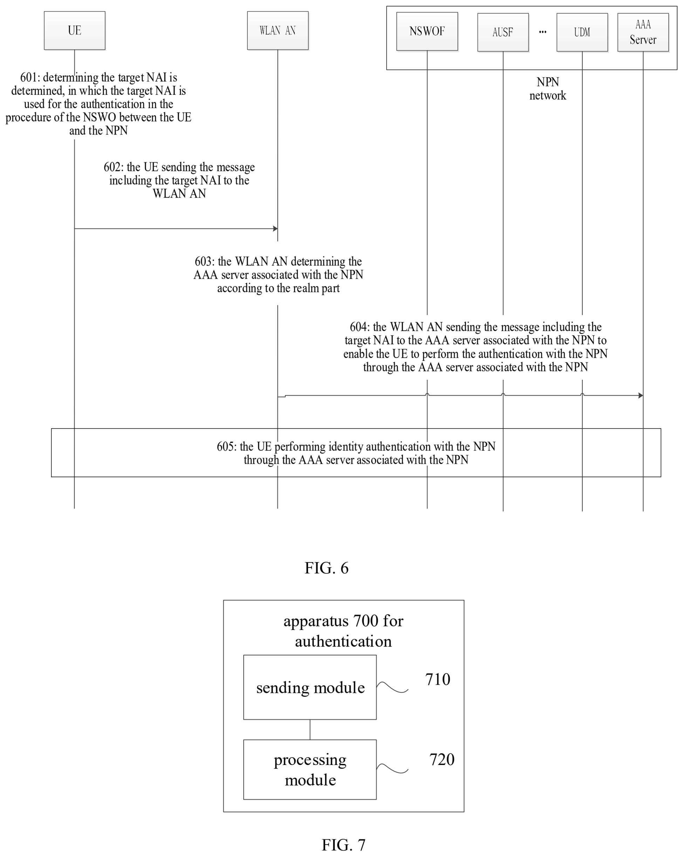

FIG. 6 is a sequence chart illustrating a method for authentication according to embodiments of the present disclosure. The method is applied to a UE and a WLAN AN. A target NAI is determined, in which the target NAI is used for an authentication in a procedure of an NSWO between the UE and an NPN; the UE sends a message including the target NAI to the WLAN AN; the WLAN AN determines an AAA server associated with the NPN according to a realm part; the WLAN AN sends the message including the target NAI to the AAA server associated with the NPN; and the UE performs the authentication with the NPN through the AAA server associated with the NPN.

As shown in FIG. 6, the method includes the following steps.

In step 601, the target NAI is determined, in which the target NAI is used for the authentication in the procedure of the NSWO between the UE and the NPN.

For the embodiments of the present disclosure, the specific implementation process may be referred to in the relevant description in step 501 of the embodiment, which will not be repeated here.

In step 602, the UE sends the message including the target NAI to the WLAN AN.

For the embodiments of the present disclosure, the specific implementation process may be referred to in the relevant description in step 502 of the embodiment, which will not be repeated here.

In step 603, the WLAN AN determines the AAA server associated with the NPN according to the realm part.

According to embodiments of the present disclosure, the WLAN AN may first determine that the target NAI is used to perform the NSWO according to the preset tag @5gc-nswo in the realm part corresponding to the target NAI, then determine the NPN that the UE needs to access according to an MNC and an MCC in the realm part, determine the NPN that the UE selects to access according to the NID in the realm part, and determine the AAA server associated with the NPN.

In step 604, the WLAN AN sends the message including the target NAI to the AAA server associated with the NPN to enable the UE to perform the authentication with the NPN through the AAA server associated with the NPN.

According to embodiments of the present disclosure, the WLAN AN may route the message sent by the UE to the relevant AAA server through the realm part, such that the AAA server may support the UE and the NPN to implement the authentication for the 5G NSWO. The message sent by the UE to the WLAN AN may be any network message that may include the target NAI, and the message type is not specifically limited in the present disclosure.

In step 605, the UE performs the authentication with the NPN through the AAA server associated with the NPN.

With the method for authentication according to the present embodiment, the WLAN AN may generate the target NAI suitable for the NPN scenario and then send the target NAI to the WLAN AN, such that the UE and the NPN may implement the authentication for the 5G NSWO in the NPN scenario.

In the above embodiments provided in the present disclosure, the methods provided in the embodiments of the present disclosure are introduced from the perspectives of the UE and the WLAN AN respectively. In order to implement the various functions in the above-mentioned methods provided in the embodiments of the present disclosure, the UE and the WLAN AN may include a hardware structure and a software module to implement the above-mentioned various functions in the form of a hardware structure, a software module, or a hardware structure plus a software module. A certain one of the above functions may be implemented in the form of a hardware structure, a software module, or a hardware structure plus a software module.

The present disclosure further provides an apparatus for authentication corresponding to the method for authentication provided by the above-described embodiments, and since the apparatus for authentication provided by the embodiments of the present disclosure corresponds to the method for authentication provided by the above-described embodiments, the embodiment of the method for authentication is also applicable to the apparatus for authentication provided by the present embodiment, which will not be described in detail in the present embodiment.

FIG. 7 is a block diagram illustrating an apparatus 700 for authentication according to embodiments of the present disclosure. The apparatus for the authentication is applied to a UE.

As shown in FIG. 7, the apparatus 700 may include:
a sending module 710 configured to send an NAI to a WLAN AN, in which the target NAI is used for authentication in a procedure of an NSWO between the UE and an NPN.

In some embodiments of the present disclosure, as shown in FIG. 7, the apparatus 700 further includes a processing module 720,
the processing module 720 is configured to determine the target NAI, in which the target NAI includes a username part and a realm part, and the realm part includes a preset label, an NID, an MNC and an MCC; and
the preset label indicates that the target NAI is used to perform the NSWO, and the realm part is used for the WLAN AN to determine a target NSWOF in the NPN, or the realm part is used for the WLAN AN to determine an AAA server associated with the NPN.

In some embodiments of the present disclosure, the processing module 720 is further configured to omit the username part in the target NAI or set the username part to anonymous in response to the UE using an SUCI.

In some embodiments of the present disclosure, the processing module 720 is further configured to perform the authentication with the NPN through the target NSWOF; or
perform the authentication with the NPN through the AAA server associated with the NPN.

In some embodiments of the present disclosure, the realm part indicates the NPN that the UE needs to access.

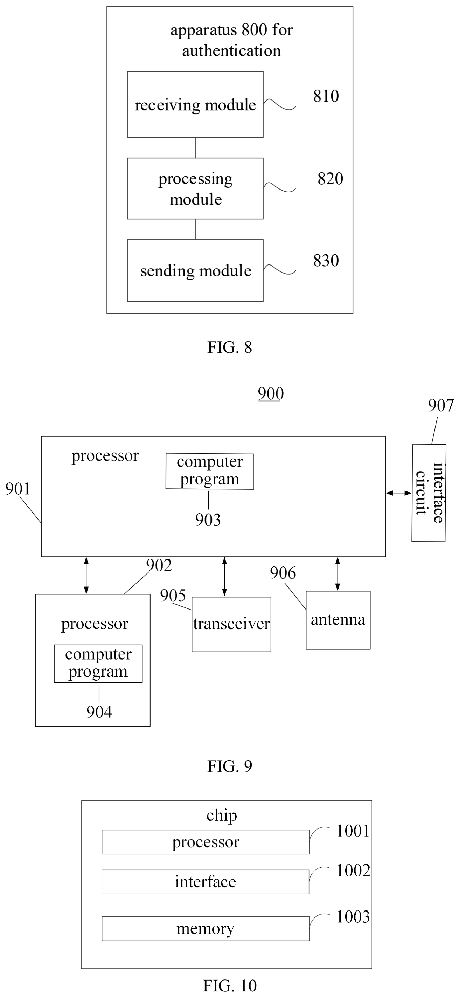

FIG. 8 is a block diagram illustrating an apparatus 800 for authentication according to embodiments of the present disclosure. The apparatus 800 for authentication is applied to a WLAN AN.

As shown in FIG. 8, the apparatus 800 may include:
a receiving module 810 configured to receive a message including a target NAI and sent by a UE, in which the target NAI is used for an authentication in a procedure of an NSWO between the UE and an NPN.

In some embodiments of the present disclosure, the target NAI includes a username part and a realm part, and the realm part includes a preset label, an NID, an MNC and an MCC; and
the preset label indicates that the target NAI is used to perform the NSWO, and the realm part is used for the WLAN AN to determine a target NSWOF in the NPN, or for the WLAN AN to determine an AAA server associated with the NPN.

In some embodiments of the present disclosure, the username part in the target NAI is omitted or the username part is set to anonymous in response to the UE using an SUCI.

In some embodiments of the present disclosure, as shown in FIG. 8, the apparatus 800 further includes a processing module 820,
the processing module 820 is configured to determine the target NSWOF according to the realm part; or
determine, according to the realm part, the AAA server associated with the NPN.

In some embodiments of the present disclosure, as shown in FIG. 8, the apparatus 800 further includes a sending module 830,
the sending module 830 is configured to send the message including the target NAI to the target NSWOF to enable the UE to perform the authentication with the NPN through the target NSWOF; or
send the message including the target NAI to the AAA server associated with the NPN to enable the UE to perform the authentication with the NPN through the AAA server associated with the NPN.

In some embodiments of the present disclosure, the realm part indicates the NPN that the UE needs to access.

Referring to FIG. 9, FIG. 9 is a structural diagram illustrating a communication device 900 according to embodiments of the present disclosure. The communication device 900 may be a network device; a user equipment; a chip, a chip system or a processor supporting the network device to implement the above-mentioned method; and a chip, a chip system or a processor supporting the user equipment to implement the above-mentioned method. The communication device may be configured to implement the method as described in method embodiments described above, with particular reference to the description of method embodiments described above.

The communication device 900 may include one or more processors 901. The processor 901 may be a general-purpose processor or a special-purpose processor, etc. It may be, for example, a baseband processor or a central processor. The baseband processor may be configured to process a communication protocol and communication data, and the central processor may be configured to control a communication device (such as a first node, a second node, a baseband chip, a terminal device, a terminal device chip, a DU or a CU, etc.), execute a computer program and process data of the computer program.

Optionally, the communication device 900 may further include one or more memories 902 on which the computer program 904 may be stored. The processor 901 executes the computer program 904 to cause the communication device 900 to perform the method as described in above method embodiments. Optionally, the memory 902 may also have the data stored therein. The communication device 900 and the memory 902 may be provided independently or integrated together.

Optionally, the communication device 900 may further include a transceiver 905 and an antenna 906. The transceiver 905 may be referred to as a transceiving unit, a transceiving machine, or a transceiving circuit or the like for implementing a transceiving function. The transceiver 905 may include a receiver and a transmitter, and the receiver may be referred to as a receiving machine or a receiving circuit or the like for implementing a receiving function; the transmitter may be referred to as a transmitting machine or a transmission circuit or the like for implementing a transmitting function.

Optionally, the communication device 900 may further include one or more interface circuits 907. The interface circuit 907 is configured to receive and transmit the code instructions to the processor 901. The processor 901 executes the code instructions to cause the communication device 900 to perform the method described in above method embodiments.

In an implementation, the processor 901 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 901 may store the computer program 903 that, when running on the processor 901, enables the communication device 900 to perform the method described in the above-mentioned method embodiments. The computer program 903 may be embedded in the processor 901, in which case the processor 901 may be implemented by hardware.

In an implementation, the communication device 900 may include a circuit that may perform the transmitting, receiving or communicating function in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The communication device described in the above embodiments may be a network device or a terminal device (such as the terminal device in the above-mentioned method embodiments), but the scope of the communication device described in the present disclosure is not limited thereto. The structure of the communication device may not be limited in FIG. 9. The communication device may be a stand-alone device or may be part of a larger device. For example, the communication device may be:
(1) a stand-alone integrated circuit (IC), or a chip, or a chip system or subsystem;
(2) a set of one or more ICs, in which optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld device, a mobile unit, an in-vehicle device, a network device, a cloud device, an artificial intelligence device, etc.;
(6) others.

In the case where the communication device may be a chip or a chip system, reference may be made to a structural diagram illustrating a chip shown in FIG. 10. The chip shown in FIG. 10 includes a processor 1001 and an interface 1002. The number of processors 1001 may be one or more, and the number of interfaces 1002 may be more than one.

Optionally, the chip further includes a memory 1003 for storing necessary computer programs and data.

Those skilled in the art may also understand that various illustrative logical blocks and steps listed in embodiments of the present disclosure may be implemented by an electronic hardware, a computer software, or a combination thereof. Whether such functions are implemented by a hardware or a software depends on specific applications and design requirements of an overall system. For each specific application, those skilled in the art may use various methods to implement the function, but such an implementation should not be understood as extending beyond the protection scope of embodiments of the present disclosure.

The present disclosure further provides a readable storage medium having stored therein instructions that, when executed by a computer, cause functions of any one of the above method embodiments to be implemented.

The present disclosure further provides a computer program product that, when executed by a computer, causes functions of any one of the above method embodiments to be implemented.

All or some of the above embodiments may be implemented by a software, a hardware, a firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

The present disclosure proposes the apparatus for authentication, which enables the UE and the NPN to implement the authentication for the 5G NSWO in the NPN scenario.

Based on the present disclosure, examples of embodiments of the present solution are as follows:
1. in a case where the UE decides to use the 5G NSWO to connect to the WLAN AN using its 5GS credential, but is not registered with the NPN, a format of the target NAI of the 5G NSWO may be used.

The UE should be able to support the generation of the NAI to enable the NSWO in the NPN scenario. The NAI should include the 5gc-nswo in the realm part, which is used to indicate that the NAI is used to perform the NSWO, and the NID.

In the 5G NSWO use case, the UE should use the NAI in the following format:
"<username>@5ge-nswo.nid<NID>.mnc.<MNC>.mec<MCC>.3gppnetwork.org".

In the above use case:
a) the username part in the target NAI is omitted in response to the UE using an SUCI;
b) the label "5gc-nswo" in the realm part indicates that the NAI is used for the 5G NSWO. The "NID", "MNC", and "MCC" indicate the NPN to which the UE is trying to connect through the 5G NSWO.

2. The UE sends the NAI to the WLAN AN, and the WLAN AN sends the NAI to the NSWOF selected according to the NAI or to the AAA server associated with the NPN.

The WLAN AN should be able to understand the NAI received from the UE, with which the WLAN AN should be able to route a traffic to the NSWOF located in the NPN. Optionally, the WLAN AN should be able to route the traffic to the AAA server associated with the NPN.

3. The UE and the NPN perform the authentication through the selected NSWOF or through the AAA server associated with the NPN.

In summary, the present disclosure has the following beneficial technical effects: the UE may generate the target NAI suitable for the NPN scenario, and then send the target NAI to the WLAN AN, such that the UE and the NPN may implement the authentication for the 5G NSWO in the NPN scenario.

The implementations or embodiments of the present disclosure are not exhaustive, and are merely illustrative of some implementations or embodiments, and are not intended to be a specific limitation on the scope of protection of the present disclosure. Unless there is no contradiction, each step in a certain implementation or embodiment may be implemented as an independent embodiment, and the steps may be arbitrarily combined, for example, a solution in which some steps are removed in a certain implementation or embodiment may also be implemented as an independent embodiment, and the order of each step in a certain implementation or embodiment may be arbitrarily exchanged. In addition, an optional mode or optional example in a certain implementation or embodiment may be arbitrarily combined. Furthermore, various implementations or embodiments may be arbitrarily combined, for example, some or all steps of different implementations or embodiments may be arbitrarily combined, and a certain implementation or embodiment may be arbitrarily combined with other implementations or optional methods or optional examples of embodiments.

In some implementations or embodiments, the terms "in response to ...", "at the time of ...", "in a case of ...", "when ...", "if ..." and the like in the present disclosure may be replaced with each other.

In some implementations or embodiments, the description methods of the present disclosure, such as "A or B", "A and/or B", "at least one of A and B", "in a case of A, in another case B", "in response to a case A, in response to another case B" and the like may include at least one of the following technical solutions according to the situation: executing A independently of B, that is, A in some implementations or embodiments; executing B independently of A, that is, B in some implementations or embodiments; selectively executing A and B, that is, selecting to execute from A and B in some implementations or embodiments; executing both A and B, that is, A and B in some implementations or embodiments.

In some implementations or embodiments, "including A", "comprising A", "used to indicate A" and "carrying A" in the present disclosure may be interpreted as directly carrying A or indirectly indicating A.

In addition, each element, each row, or each column in the table involved in the present disclosure may be implemented as an independent embodiment, and the combination of any elements, any rows, and any columns may also be implemented as an independent embodiment.

Those of ordinary skill in the art may understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the terms "first", "second", "third", "A", "B", "C" and "D" have no order of precedence or size.

As used herein, the terms "machine readable medium" and "computer readable medium" refer to any computer program product, device, and/or apparatus (e.g., a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal used to provide the machine instructions and/or data to the programmable processor.

The systems and technologies described herein may be implemented in a computing system (e.g., as a data server) including a background component, a computing system (e.g., an application server) including a middleware component, a computing system including a front-end component (e.g., a user computer having a graphical user interface or a web browser, through which the user may interact with embodiments of the systems and technologies described herein), or a computing system including any combination of such background component, middleware component, or front-end component). Components of the system may be connected to each other by digital data communication (such as a communication network) in any form or medium. Examples of the communication network include a local area network (LAN), a wide area network (WAN), and the Internet.

The computer system may include a client and a server. The client and the server are generally remote from each other and typically interact through the communication network. A client-server relationship is generated by computer programs operating on corresponding computers and having the client-server relationship with each other.

It should be understood that steps may be reordered, added or deleted using various forms of processes illustrated above. For example, each step described in the present disclosure may be executed in parallel, sequentially or in different orders, so long as a desired result of the technical solution disclosed in the present disclosure may be achieved, which is not limited here.

Furthermore, it should be understood that various embodiments of the present disclosure may be implemented alone or in combination with other embodiments, as the solution allows.

Those skilled in the art may appreciate that units and algorithm steps of each example described in conjunction with embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present disclosure.

It will be clear to those skilled in the art that, for convenience and brevity of the description, specific working procedures of the above described systems, devices and units may refer to corresponding procedures in the preceding method embodiments and will not be described in detail here.

The above description is only for the specific embodiments of the present disclosure, but the scope of the present disclosure is not limited thereto. Any person skilled in the art may easily think of changes or substitutions within the technical scope of the present disclosure, which shall be covered by the protection scope of the present disclosure. Therefore, the protection scope of the present disclosure shall be in line with the attached claims.

## Claims

1. A method for authentication, applied to a user equipment (UE), comprising:
sending a message comprising a target network access identifier (NAI) to a wireless local area network (WLAN) access network (AN), wherein the target NAI is used for authentication in a procedure of a non-seamless WLAN offload (NSWO) between the UE and a non-public network (NPN).

2. The method according to claim 1, further comprising:
determining the target NAI, wherein the target NAI comprises a username part and a realm part, and the realm part comprises a preset label, a network identifier (NID), a mobile network code (MNC) and a mobile country code (MCC); and
the preset label indicates that the target NAI is used to perform the NSWO, and the realm part is used for the WLAN AN to determine a target non-seamless WLAN offload function (NSWOF) in the NPN, or the realm part is used for the WLAN AN to determine an AAA server associated with the NPN.

3. The method according to claim 2, wherein the username part in the target NAI is omitted or the username part is set to anonymous when the UE uses an anonymous subscriber concealed identifier (SUCI).

4. The method according to claim 2 or 3, further comprising:
performing the authentication with the NPN through the target NSWOF; or
performing the authentication with the NPN through the AAA server associated with the NPN.

5. The method according to claim 2, wherein the realm part indicates the NPN to which the UE needs access.

6. A method for authentication, applied to a wireless local area network (WLAN) access network (AN), comprising:
receiving a message comprising a target network access identifier (NAI), wherein the message is sent by a user equipment (UE), and the target NAI is used for authentication in a procedure of a non-seamless WLAN offload (NSWO) between the UE and a non-public network (NPN).

7. The method according to claim 6, wherein the target NAI comprises a username part and a realm part, and the realm part comprises a preset label, a network identifier (NID), a mobile network code (MNC) and a mobile country code (MCC); and
the preset label indicates that the target NAI is used to perform the NSWO, and the realm part is used for the WLAN AN to determine a target non-seamless WLAN offload function (NSWOF) in the NPN, or for the WLAN AN to determine an AAA server associated with the NPN.

8. The method according to claim 7, wherein the username part in the target NAI is omitted or the username part is set to anonymous when the UE uses an anonymous subscriber concealed identifier (SUCI).

9. The method according to claim 7 or 8, further comprising:
determining the target NSWOF according to the realm part; or
determining, according to the realm part, the AAA server associated with the NPN.

10. The method according to claim 9, further comprising:
sending the message comprising the target NAI to the target NSWOF to enable the UE to perform the authentication with the NPN through the target NSWOF; or
sending the message comprising the target NAI to the AAA server associated with the NPN to enable the UE to perform the authentication with the NPN through the AAA server associated with the NPN.

11. The method according to claim 7, wherein the realm part indicates the NPN to which the UE needs access.

12. An apparatus for authentication, applied to a user equipment (UE), comprising:
a sending module configured to send a message comprising a target network access identifier (NAI) to a wireless local area network (WLAN) access network (AN), wherein the target NAI is used for authentication in a procedure of a non-seamless WLAN offload (NSWO) between the UE and a non-public network (NPN).

13. An apparatus for authentication, applied to a wireless local area network (WLAN) access network (AN), comprising:
a receiving module configured to receive a message comprising a target network access identifier (NAI), wherein the message is sent by a user equipment (UE), and the target NAI is used for authentication in a procedure of a non-seamless WLAN offload (NSWO) between the UE and a non-public network (NPN).

14. A communication device, comprising:
a transceiver;
a memory; and
a processor, respectively connected to the transceiver and the memory, configured to control receiving and sending a wireless signal of the transceiver by executing computer-executable instructions on the memory, and perform the method according to any one of claims 1 to 11.

15. A computer storage medium having stored therein computer-executable instructions that, when executed by a processor, cause the method according to any one of claims 1 to 11 to be implemented.
